# EUROPEAN PATENT APPLICATION

(11) **EP 0 982 723 A2**
(43) Date of publication of application: **01.03.2000**
(21) Application number: 99107028.5
(22) Date of filing: 09.04.1999
(51) Int. Cl.: G11B 17/22

(54) **Modular data storage system**

(30) Priority: 20.08.1998 US 137350
(71) Applicant: Hewlett-Packard Company, Palo Alto, California 94304 (US)
(72) Inventor: White, Joseph M., Windsor, CO 80550 (US); Lester, Matthias A., Greeley, CO 80634 (US); Jones, David P., Bellvue, CO 80512 (US)
(74) Representative: Schoppe, Fritz, Dipl.-Ing.

(57) **Abstract**

A modular data storage system (10) for handling and storing data cartridges may comprise a cartridge handling assembly (50), at least one modular unit (12, 13, 14), and a vertical lift system (58). Each of the modular units (12, 13, 14) of the modular data storage system (10) is stackable vertically upon one another to form adjacent modular units. Each of the modular units (12, 13, 14) comprises a housing (30, 32, 34) with openings (36, 38) therein which are adapted to allow the cartridge handling assembly (50) to pass therethrough. A plurality of cartridge receiving devices (40) are included within each of the modular units (12, 13, 14). The adjacent modular units (12, 13, 14) are substantially in alignment and positioned such that the cartridge handling assembly (50) may be vertically translated among the adjacent modular units (12, 13, 14). The vertical lift system (58) is provided to vertically translate the cartridge handling assembly (50) among the adjacent modular units (12, 13, 14). The vertical lift system (58) may include a pinion gear assembly (60) mounted on the cartridge handling assembly (50), a rack assembly (80, 90) mounted on each of the modular units (12, 13, 14) and operably associated with the pinion gear assembly (60), and an actuator system (70) operably attached to the pinion gear assembly (60). In one embodiment, the modular units (12, 13, 14) may be placed within a housing (120).

## Description

### FIELD OF THE INVENTION

The present invention relates generally to data storage systems for handling and storing data storage media devices such as data cartridges, and more particularly to a data storage system comprised of individual vertically-stackable modular units.

### BACKGROUND OF THE INVENTION

Data storage in the computer industry is accomplished in a number of ways. For example, data may be stored on tape, compact disk, "floppy" or "hard" disk, and the like. Oftentimes, data storage media which is transferrable from one location to another is housed within a parallelepiped-shaped cartridge. It is to be understood that the term "cartridge" or "data cartridge" as used in the present application encompasses any data storage media device, whether or not it is housed within a cartridge.

Data storage systems are used to store data storage media devices such as data cartridges at known locations and to retrieve desired cartridges so that data may be written to or read from the cartridges. A typical data storage system may include different types of cartridge receiving devices. For example, one type of cartridge receiving device is a cartridge storage rack or "magazine" which has a plurality of individual cartridge storage locations. Another type of cartridge receiving device is a cartridge read/write device or "drive". A data storage system may also include a cartridge handling assembly for retrieving data cartridges and translating them among cartridge receiving devices (e.g., from a cartridge storage location to a drive and vice-versa).

Data storage systems may be produced in a variety of sizes and configurations. In order to establish a product definition, a data storage system manufacturer may survey potential customers as to their specific needs. The manufacturer may then design a "point" product around this definition. This process may be repeated for different types of customers which are typically classified as "low-end", "mid-range" or "high-end" customers ("low-end" customers requiring a more cost-competitive, smaller capacity library than "mid-range" or "high-end" customers). The result may be a series of products not only of different sizes and capacities, but also having unique housings, assemblies, and individual components.

Furthermore, the capacity of each of these products is limited, i.e., within any particular data storage system produced by a manufacturer there is a specific number of cartridge storage locations and drives. This limits the options for a customer whose needs change and who may require a larger data storage system at some point in the future. Specifically, that customer can either purchase another data storage system to use along with their original data storage system, or that customer can purchase a new, larger-capacity data storage system to replace the original one. While the former option involves less initial cost than the latter, there are several disadvantages for the customer to utilize multiple data storage systems rather than purchase a single, larger system. Specifically, each data storage system has its own cartridge handling assembly, data storage racks and drives. There is an unnecessary duplication of components such as the cartridge handling assembly: i.e., the customer needing an upgrade requires more data storage racks and possibly more drives, but not an extra cartridge handling assembly. Furthermore, the data storage racks and drives from the first data storage system are not accessible by the cartridge handling assembly of the second data storage system, and vice-versa.

Thus, a need exists for a data storage system which is comprised of individual modular units that can be combined to form data storage systems of varying size and capacity. Ideally, this modular data storage system would utilize a single cartridge handling assembly which may be vertically translated among all of the modular units so that data cartridges may be transferred from a cartridge receiving device in one modular unit to a different cartridge receiving device in another modular unit.

The individual modular units would preferably be comprised of interchangeable housings, assemblies and individual components. This would allow the entire family of data storage systems, including systems for low-end, mid-range, and high-end customers, to be designed and manufactured together. This replication of components would provide many advantages to both the manufacturer and the customer, since a single set of components could be used to supply an entire family of data storage systems.

### SUMMARY OF THE INVENTION

The present invention is directed to a modular data storage system for handling and storing data cartridges. The modular data storage system may comprise a cartridge handling assembly, at least one modular unit, and a vertical lift system. Each of the modular units of the modular data storage system is stackable vertically upon one another to form adjacent modular units. Each of the modular units comprises a housing with openings therein which are adapted to allow the cartridge handling assembly to pass therethrough. A plurality of cartridge receiving devices are included within each of the modular units. The adjacent modular units are substantially in alignment and positioned such that the cartridge handling assembly may be vertically translated among the adjacent modular units. The vertical lift system is provided to vertically translate the cartridge handling assembly among the adjacent modular units. The vertical lift system may include a pinion gear assembly mounted on the cartridge handling assembly, a rack assembly mounted on each of the modular units and operably associated with the pinion gear assembly, and an actuator system operably attached to the pinion gear assembly.

The pinion gear assembly may comprise first and second pinion gears mounted opposite one another (preferably diagonally). The rack assembly may comprise first and second racks also mounted opposite one another (preferably diagonally). Within any two adjacent modular units (an upper modular unit and a lower modular unit), there is an upper rack and a lower rack, each with multiple teeth having a predetermined pitch. The distance between the lowermost gear tooth on the upper rack and the uppermost gear tooth on the lower rack is equal to the predetermined pitch, or a multiple thereof. The upper rack and the lower rack are preferably spaced apart from one another.

The modular data storage system may be further comprise a housing adapted to receive a plurality of the modular units. The housing may comprise a plurality of attaching devices fixedly attached to the housing which are adapted to fixedly attached the modular units to the housing.

### BRIEF DESCRIPTION OF THE DRAWINGS

Illustrative and presently preferred embodiments of the invention are shown in the accompanying drawings in which:
Fig. 1 is an isometric view of a modular data storage system according to the present invention;
Fig. 2 is an isometric view of a modular unit from the modular data storage system of Fig. 1, with most of the housing broken away;
Fig. 3 is a top plan view of the modular unit of Fig. 2 schematically illustrating the preferred mounting position of the actuator system and pinion gear assembly;
Fig. 4 schematically illustrates an alternative longitudinal mounting position for the actuator system and pinion gear assembly of Fig. 3;
Fig. 5 schematically illustrates an alternative lateral mounting position for the actuator system and pinion gear assembly of Fig. 3;
Fig. 6 is an enlarged side elevational view schematically illustrating an upper rack and a lower rack from two adjacent modular units and a pinion gear of the modular data storage system of Fig. 1; and
Fig. 7 is an isometric view of modular units from the modular data storage system of Fig. 1 mounted within a housing.

### DETAILED DESCRIPTION OF THE INVENTION

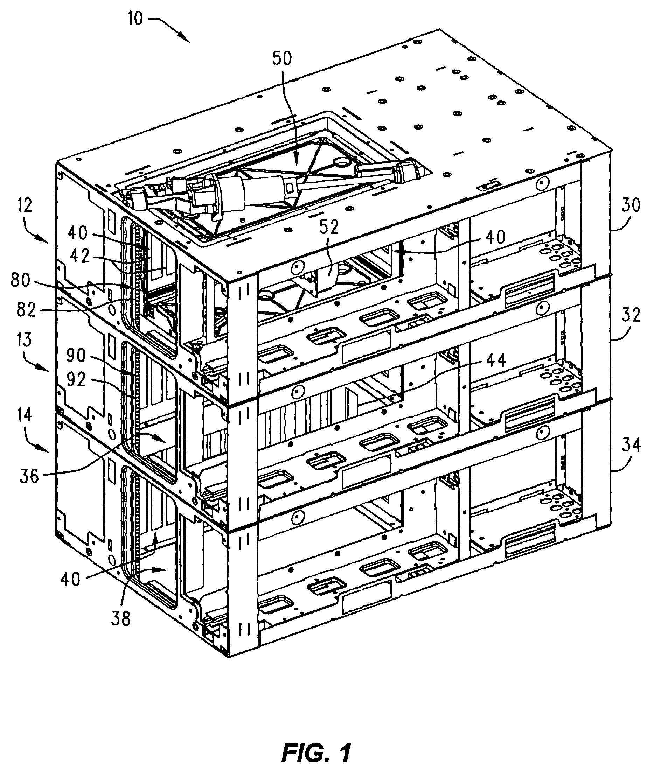

A modular data storage system 10 according to the present invention is shown in Fig. 1 and may comprise at least one modular unit 12, 13, 14. The modular units 12, 13, 14 are stackable vertically upon one another to form adjacent modular units. While three modular units are shown in Fig. 1, it is to be understood that as few as one, or as many modular units as a customer desires, may be utilized in a modular data storage system. Furthermore, one or more modular units may be added to the modular data storage system at any time. The modular data storage system 10 may also comprise a cartridge handling assembly 50 which may be vertically translated among the adjacent modular units 12, 13, 14 as described in further detail below.

Each modular unit 12, 13, 14 may be substantially identical to one another, except where noted otherwise below. Each modular unit 12, 13, 14 may comprise a housing 30, 32, 34, each having an upper opening, e.g., 36 and a lower opening, e.g., 38. Each of the openings 36, 38 are sized and shaped to allow the cartridge handling assembly 50 to pass therethrough. Each modular unit 12, 13, 14 may further comprise a plurality of cartridge receiving devices 40 which may be, for example, magazines (e.g., 42) or drives (e.g., 44), or any combination thereof. The configuration of cartridge receiving devices 40 within each modular unit 12, 13, 14 need not be identical; each modular unit may be configured to suit a customer's particular needs.

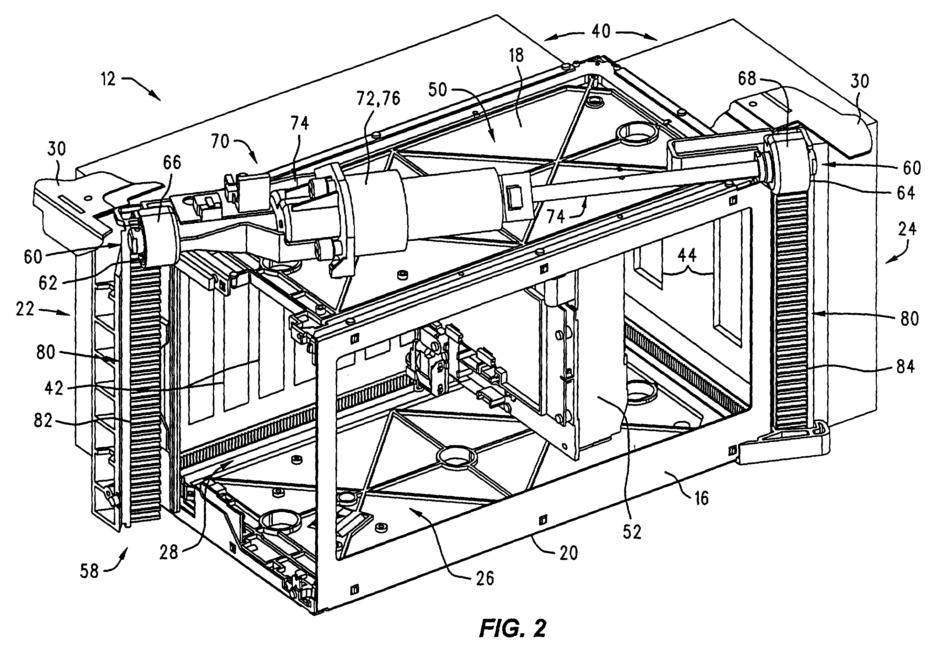

The cartridge handling assembly 50 may be of the type described in U.S. Patent Application Serial No. 09/045,134 filed 3/20/98 for MULTI-PLANE TRANSLATING CARTRIDGE HANDLING SYSTEM, which is hereby incorporated by reference for all that is contained therein. Fig. 2 illustrates a modular unit 12 with most of the housing 30 broken away to more clearly show the cartridge handling assembly 50. It is to be understood that the description below may apply to all of the modular units (e.g., 12, 13, 14) of the modular data storage system 10.

As shown in Fig. 2, the cartridge handling assembly 50 may comprise a generally rectangular frame 16 having an upper portion 18, a lower portion 20, and four sides 22, 24, 26, 28. Cartridge receiving devices 40 (magazines 42 and drives 44) are preferably accessible from at least one, and most preferably two or more, of the sides 22, 24, 26, 28. The cartridge handling assembly 50 may also comprise a cartridge access device 52 capable of loading and retrieving the data cartridges (not shown) from the cartridge receiving devices 40.

The modular data storage system 10 of the present invention may also comprise a vertical lift system 58, which is best shown in Fig. 2. The vertical lift system 58 may comprise a pinion gear assembly 60 mounted on the cartridge handling assembly 50. The vertical lift system 58 may further comprise an actuator system 70 operably attached to the pinion gear assembly 60 for vertically translating the cartridge handling assembly 50 among the adjacent modular units 12, 13, 14 (Fig. 1). The vertical lift system 58 may further comprise a rack assembly (e.g., 80) mounted on each of said modular units (e.g., 12), which is operably associated with the pinion gear assembly 60.

The pinion gear assembly 60 is preferably comprised of a first pinion gear 62 and a second pinion gear 64, mounted diagonally opposite one another as shown in Fig. 2. Each pinion gear 62, 64 is preferably at least partially enclosed within a protective housing 66, 68, respectively. The rack assembly 80 as shown in Fig. 2 is preferably comprised of a first rack 82 and a second rack 84, mounted diagonally opposite one another and in alignment with the pinion gears 62, 64, respectively. Each rack 82, 84 is fixedly attached to the modular unit housing 30. The actuator system 70 is preferably comprised of a motor 72, a gear/shaft assembly 74 to operably attach the motor 72 to the pinion gears 62, 64, and a protective housing 76. The actuator system protective housing 76 may be integrally formed with at least one of the pinion gear protective housings (e.g. 66), as shown in Fig. 2.

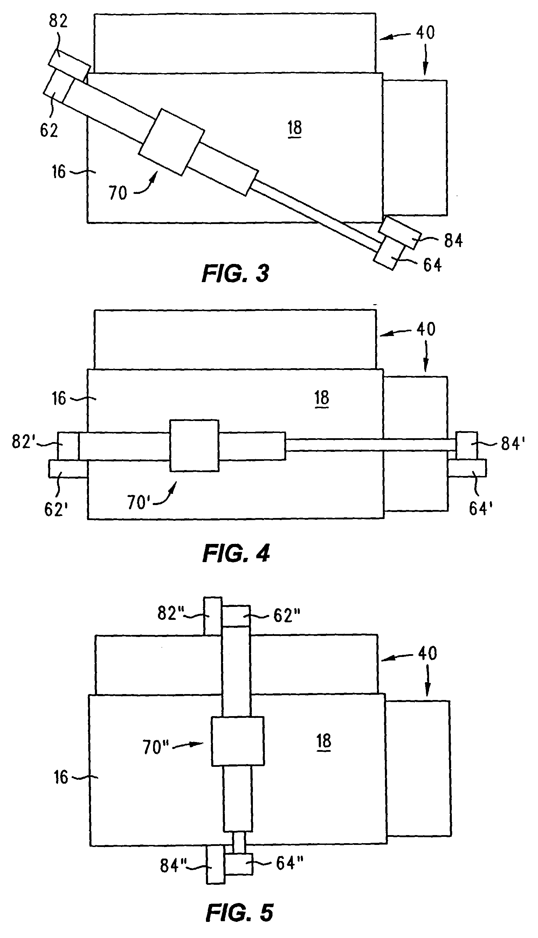

The actuator system 70 and pinion gears 62, 64 of the pinion gear assembly 60 are preferably fixedly attached to the cartridge handling assembly frame 16 at the upper portion 18 thereof. The actuator system 70 and pinion gears 62, 64 are preferably mounted diagonally as shown in Figs. 1, 2 and schematically in Fig. 3 in order to most evenly distribute the weight thereof along the upper portion 18 of the frame 16. The racks 82, 84 are also mounted diagonally as shown in this embodiment. Figs. 4 and 5 illustrate alternate mounting positions for the actuator system, pinion gears and racks. As shown in Fig. 4, the actuator system 70' may be mounted longitudinally, with the pinion gears 62', 64' being mounted longitudinally opposite one another and the racks 82', 84' also being mounted longitudinally opposite one another. As shown in Fig. 5, the actuator system 70'' may be mounted laterally, with the pinion gears 62'', 64'' being mounted laterally opposite one another and the racks 82'', 84'' also being mounted laterally opposite one another. Furthermore, the actuator system 70 may be mounted diagonally, longitudinally or laterally as shown in Figs. 3-5 at either the upper portion 18 or the lower portion 20 (Fig. 2) of the frame 16.

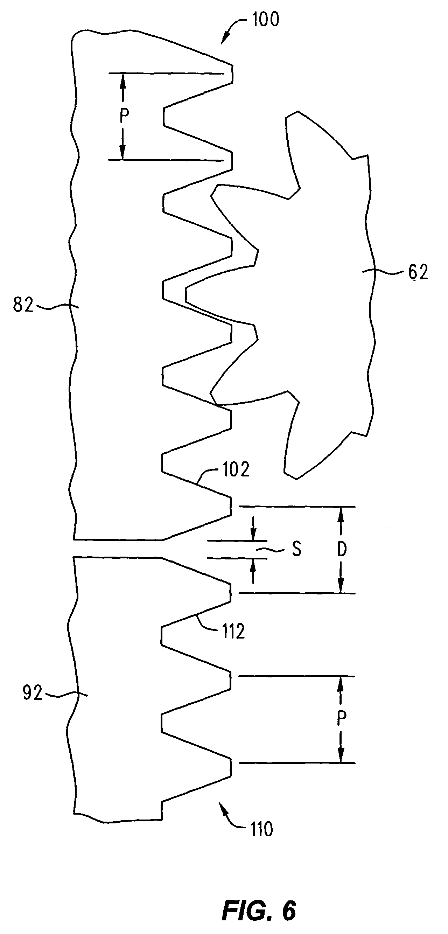

Referring again to Fig. 1, among adjacent modular units 12, 13, 14 there is an upper modular unit (e.g., 12) and a lower modular unit (e.g. 13). The upper modular unit 12 comprises an upper rack assembly 80, and the lower modular unit comprises a lower rack assembly 90. Fig. 6 illustrates an upper rack 82 and a lower rack 92 from two adjacent modular units 12, 13, respectively, and a pinion gear 62. It is to be understood that the following description applies equally to the second rack (e.g., 84) of each rack assembly 80, 90 and also to the second pinion gear 64 of the pinion gear assembly 60.

As shown in Fig. 6, the upper rack 82 comprises a plurality of gear teeth 100 having a predetermined pitch "P" (measured centerline-to-centerline), and the lower rack 92 also comprises a plurality of gear teeth 110 having the same predetermined pitch "P". The upper rack 82 comprises a lowermost gear tooth 102, and the lower rack 92 comprises an uppermost gear tooth 112. In order for the pinion gear 62 to translate smoothly between the upper rack 82 and lower rack 92, two conditions must exist. First, the adjacent modular units 12, 13 must be in substantial alignment. More specifically, the upper rack 82 of the upper modular unit 12 and the lower rack 92 of the lower modular unit 13 must be in substantial alignment (and, correspondingly, the upper rack assembly 80 and lower rack assembly 90 must be in substantial alignment). Second, as shown in Fig. 6, the distance "D" (measured the same way as "P", i.e., centerline-to-centerline) between the lowermost gear tooth 102 of the upper rack 82 and the uppermost gear tooth 112 of the lower rack 92 must be equal to a multiple of the predetermined pitch "P", in other words, P, 2P, etc. Most preferably, and for the smoothest translation, D is equal to P. As shown in Fig. 6, there is preferably a space "S" between the upper rack 82 and the lower rack 92 so that the upper rack 82 and lower rack 92 do not abrade one another due to vibrations present during normal operation of the cartridge handling assembly 50 (Figs. 1 and 2). For example, while the racks 82, 92 may each have a pitch "P" of approximately 6 mm, the spacing "S" may be approximately 0.5 mm.

As described above, any number of modular units 12, 13, 14 may be stacked vertically upon one another to form adjacent modular units of a modular data storage system 10, Fig. 1. The rack assemblies (e.g. 80, 90) may be aligned using an alignment tool (not shown) and shifting either the lower adjacent modular unit 13 or the upper adjacent modular unit 12 until the rack assemblies are aligned. Then, the lower modular unit 13 may be fixedly attached to the upper modular unit 12 using any conventional attachment means such as screws or the like. The distance "D" and spacing "S" are maintained between the upper and lower racks 82, 92 (and upper and lower rack assemblies 80, 90) because of the position of the racks 82, 92 within each modular unit housing 30, 32.

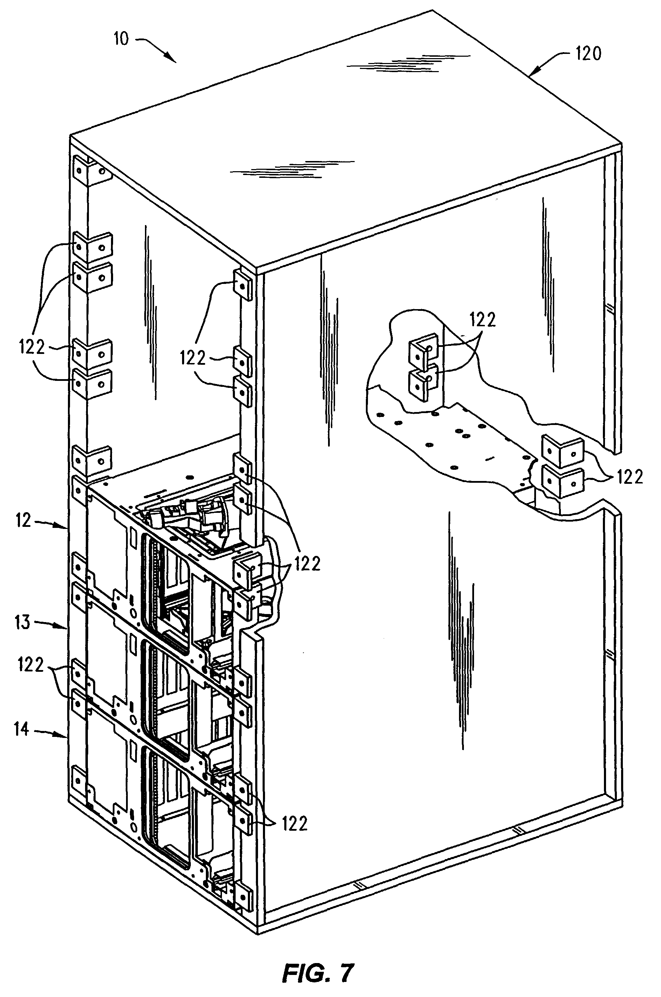

In an alternative embodiment shown in Fig. 7, the modular units 12, 13, 14 of the modular data storage system 10 may be placed within a housing 120. The housing 120 may comprise a plurality of attaching devices 122, such as the L-shaped brackets shown in Fig. 7, which are adapted to fixedly attach the modular units 12, 13, 14 to the housing 120. The attaching devices 122 may be fixedly attached to the housing 120 using a screw or the like. Each of the modular units 12, 13, 14 may be inserted into the housing 120 and then fixedly attached to several of the attaching devices 122 screws or the like. It is to be understood that, while L-shaped brackets are shown in Fig. 7, any conventional attaching device may be used to attach the modular units to the housing, as long as the attaching device does not interfere with the vertical translation of the cartridge handling assembly 50 among the adjacent modular units. The modular units 12, 13, 14 may alternatively be directly attached to the housing 120. The size of the housing 120 (and number of attaching devices 122 the housing 120 can accommodate) may be determined in accordance with a customer's requirements. In the embodiment shown in Fig. 7 (as with all embodiments of the present invention), the above-described requirements for smooth translation of the pinion gear (e.g., 62, Fig. 6) between the upper racks (e.g. 82) and lower racks (e.g., 92) must be maintained. In other words, in addition to aligning the adjacent modular units as described above, the proper distance ("D", Fig. 6) must be maintained between the upper and lower racks (82, 92, Fig. 6). This is accomplished by positioning the modular units 12, 13, 14 directly adjacent one another within the housing 120.

It can be seen from the above description that each of the modular units has many common components, such as the housing, racks, drives and magazines. In addition, a single cartridge handling assembly is used to access the drives and magazines of all of the modular units, as well as any unit that may be subsequently added. This replication of components provides many advantages to the manufacturer as well as low-end, mid-range, and high-end customers, since a single set of components could be used to supply an entire family of data storage systems.

While illustrative and presently preferred embodiments of the invention have been described in detail herein, it is to be understood that the inventive concepts may be otherwise variously embodied and employed and that the appended claims are intended to be construed to include such variations except insofar as limited by the prior art.

## Claims

1. A modular data storage system (10) for handling and storing data cartridges, comprising:
a) a cartridge handling assembly (50);
b) at least one modular unit (12, 13, 14), each of said modular units being stackable vertically upon one another to form adjacent modular units, comprising:
i) a housing (30, 32, 34) having an upper opening (36) and a lower opening (38), wherein each of said upper opening and lower opening is adapted to allow said cartridge handling assembly (50) to pass therethrough;
ii) a plurality of cartridge receiving devices (40); and
iii) wherein said adjacent modular units (12, 13, 14) are substantially in alignment and positioned such that said cartridge handling assembly (50) may be vertically translated among said adjacent modular units (12, 13, 14); and
c) a vertical lift system (58) operably associated with said cartridge handling assembly (50) for vertically translating said cartridge handling assembly (50) among said adjacent modular units (12, 13, 14).

2. The modular data storage system (10) of claim 1 wherein said vertical lift system (58) comprises:
a) a pinion gear assembly (60) mounted on said cartridge handling assembly (50);
b) a rack assembly (80, 90) mounted on each of said modular units (12, 13, 14) and operably associated with said pinion gear assembly (60); and
c) an actuator system (70) operably attached to said pinion gear assembly (60).

3. The modular data storage system (10) of claim 1 further comprising a housing (120) adapted to receive a plurality of said modular units.

4. The modular data storage system (10) of claim 2 wherein:
a) said adjacent modular units (12, 13, 14) comprise an upper modular unit (13) with an upper rack assembly (80) and a lower modular unit (14) with a lower rack assembly (90);
b) said upper rack assembly (80) comprises an upper rack (82) having a plurality of gear teeth (100), including a lowermost gear tooth (102), which are spaced apart by a predetermined pitch (P);
c) said lower rack assembly (90) comprises a lower rack (92) in substantial alignment with said upper rack (82), said lower rack (92) having a plurality of gear teeth (110), including an uppermost gear tooth (112), which are spaced apart by said predetermined pitch (P) of said upper rack;
d) wherein the distance (D) between said lowermost gear tooth (102) of said upper rack (82) and said uppermost gear tooth (112) of said lower rack (92) is equal to a multiple of said predetermined pitch (P).

5. The modular data storage system of claim 4 where the distance (d) between said lowermost gear tooth (102) of said upper rack (82) and said uppermost gear tooth (112) of said lower rack (92) is equal to one unit of said predetermined pitch (P).

6. The modular data storage system (10) of claim 2 wherein:
a) said pinion gear assembly (60) comprises a first pinion gear (62) and a second pinion gear (64) mounted opposite said first pinion gear (62), and said actuator system (70) is mounted between said first pinion gear (62) and said second pinion gear (64); and
b) said rack assembly (80) comprises a first rack (82) and a second rack (84) mounted opposite said first rack (82).

7. A vertical lift system (58) for a modular data storage system (10), said modular data storage system (10) comprising a cartridge handling assembly (50) and at least one modular unit (12, 13, 14) comprising a housing (30, 32, 34) and a plurality of cartridge receiving devices (40), each of said modular units (12, 13, 14) being stackable vertically upon one another to form adjacent modular units, comprising:
a) a pinion gear assembly (60) mounted on said cartridge handling assembly (50);
b) an actuator system (70) operably attached to said pinion gear assembly (60) for vertically translating said cartridge handling assembly (50) among said adjacent modular units (12, 13, 14);
c) a rack assembly (80, 90) mounted on each of said modular units (12, 13, 14) and operably associated with said pinion gear assembly (60); and
d) wherein said rack assemblies (80, 90) of said adjacent modular units (12, 13, 14) are substantially in alignment and positioned such that said cartridge handling assembly (50) may be vertically translated among said adjacent modular units (12, 13, 14).

8. The vertical lift system (58) of claim 7 wherein:
a) said adjacent modular units (12, 13, 14) comprise an upper modular unit (12) with an upper rack assembly (80) and a lower modular unit (14) with a lower rack assembly (90);
b) said upper rack assembly (80) comprises an upper rack (82) having a plurality of gear teeth (100), including a lowermost gear tooth (102), which are spaced apart by a predetermined pitch (P);
c) said lower rack assembly (90) comprises a lower rack (92) in substantial alignment with said upper rack (82), said lower rack (92) having a plurality of gear teeth (110), including an uppermost gear tooth (112), which are spaced apart by said predetermined pitch (P) of said upper rack;
d) wherein the distance (D) between said lowermost gear tooth (102) of said upper rack (82) and said uppermost gear tooth (112) of said lower rack (92) is equal to a multiple of said predetermined pitch (P).

9. The modular data storage system of claim 8 where the distance (D) between said lowermost gear tooth (102) of said upper rack (82) and said uppermost gear tooth (112) of said lower rack (92) is equal to one unit of said predetermined pitch (P).

10. The vertical lift system (58) of claim 7 wherein:
a) said pinion gear assembly (60) comprises a first pinion gear (62) and a second pinion gear (64) mounted opposite said first pinion gear (62), and said actuator system (70) is mounted between said first pinion gear (62) and said second pinion gear (64); and
b) said rack assembly (80) comprises a first rack (82) and a second rack (84) mounted opposite said first rack (82).
